# EUROPEAN PATENT SPECIFICATION

(11) **EP 1 225 747 B1**
(45) Date of publication and mention of the grant of the patent: **22.03.2006**
(21) Application number: 01850012.4
(22) Date of filing: 17.01.2001
(51) Int. Cl.: H04L 29/06, H04Q 7/22

(54) **Originator authentication**
Herkunftauthentifikation
Authentification de l'envoyant

(43) Date of publication of application: 24.07.2002
(73) Proprietor: MICROSOFT CORPORATION, Redmond, Washington 98052-6399 (US)
(72) Inventor: Johansson, Stefan, 111 29 Stockholm (SE); Wistrand, Lennart, 113 26 Stockholm (SE)
(74) Representative: Henningsson, Gunnar

(56) References cited:
- WO-A-00/56008
- WO-A-97/18651
- WO-A-99/13448
- WO-A-99/37104

## Description

### Technical Field

The present invention relates to methods, apparatuses and a system in connection with pushing of packet data from an originator to a wireless communication station.

### Background of the Invention

Today, different kind of digital radio communications networks that support packet data transfer are being evolved. This means that mobile users having access to these radio communication networks are provided with the possibility to communicate packet data with different packet data networks, such as with the Internet, but also with corporate intranets and X.25 networks and the like. Thus, the digital radio, or wireless, communication network will be a wireless extension of, for example, the Internet and existing X.25 networks. Subscribers to such a radio communication network i.e. the mobile users, will be able to benefit from most of the applications designed for these data packet protocols, such as Web browsing and exchange of e-mails etc., from their wireless equipment with which they access the wireless communication networks. Furthermore, a number of new mobile data services are currently being developed which will make use of these packet data transfer capabilities, while the performance of existing mobile data services will be improved.

Many of the new and existing mobile data services will make use of the possibility to push data to mobile users. Typically, to push data to a user means that a push server of a system or network automatically provides the user with some kind of information, i.e. the transfer of information is performed on the initiative of the push server. Often this information is of the kind which is desired by the user, and therefore defined by a set of criteria in order to meet the desires of the user.

The technology of pushing information is today perhaps most widely used for pushing information to a stationary user, such as a user operating a computer connected to the Internet. However, with the rapid growth of mobile communications, in combination with the flexibility of being able to be reached by pushed information at any location, the possibility of receiving pushed information from a push server will become more and more interesting for users that are connected to wireless communication networks.

One of the most important grounds for the development described above is, besides the introduction of packet data transmissions to/from the wireless communication stations operated by the mobile users, the technology enhancements of the radio communications networks, such as the cellular radio communications networks, which provide higher and higher bandwidths for these packet data transmissions. Examples of wireless communication network with higher bandwidths and with support for packet data transfer to the wireless terminal of a mobile user are PDC-P networks (Pacific Digital Cellular), which in Japan provides the existing I-mode service, GSM networks (Global System for Mobile Communications) providing GPRS services (General Packet Radio Service), systems using radio networks based on EDGE technology (Enhanced Data Rates for GSM and TDMA/136 Evolution) or on WCDMA technology (Wideband Code Division Multiple Access), or any other forthcoming new generation of wireless communication networks which are known as UMTS networks (Universal Mobile Telephony Standard), or 3G networks, and which are based on the broadband radio networks WCDMA or cdma2000.

The pushing of packet data to a mobile user corresponds to a process in which the wireless communication network initiates the packet data transfer to the user's wireless communication station, wherein the packet data being transferred most often is received by the wireless communication network from an external source, i.e. a push server on an external network which is operatively connected to the wireless communication network. When pushing information to a wireless communication station there are three important requirements that have to be met in order for a wireless communication network to be able to initiate the packet data transfer to the wireless station. These requirements are that 1) the wireless station has been switched on, 2) the wireless station has identified itself to those parts of the wireless communication network that provides the packet data service, and that 3) a Packet Data Protocol (PDP) address has been allocated to the wireless station.

After the requirements above have been met, measures are taken by the wireless network for initializing and activating a packet data service to the wireless station, measures that are well known in the art. After activation of the packet data service, packet data addressed to the PDP address that has been allocated to a wireless station will be routed to that station. A PDP address can be allocated to the station either as a static or a dynamic PDP address. Thus, the PDP address to be used by a server wishing to push data to a mobile communication station, i.e. to transfer data without the station having specifically requested the data, is either a permanent (static) or a temporary (dynamic) address allocated to that station.

The PDP address, irrespective of whether it is static or dynamic, needs to be known to a server that wishes to transfer packet data to the station. The PDP address can become known to the server by making an inquiry to the appropriate repository, possibly different repositories depending on whether static or dynamic addresses are used, in the operator's wireless communication network.

In the Swedish patent application 9903637-8, filed on 8 October 1999, and published as SE9903637 on 9 April 2001 a number of drawbacks related to the above described technique of inquiring for a mobile users PDP address are discussed. These drawbacks relate to the consequences of such things as: signaling load against the repository storing the PDP addresses; a change of the PDP address allocated to a specific mobile user from time to time; and the routing of PDP address requests to repositories.

The solution, according to the disclosure of the above identified patent application, is that a networks server, that wants to transfer packet data to a wireless communication station via a wireless communication network, requests that the wireless station sets up a Packet Data Protocol connection with the server. The request is accomplished by sending a message to the station, via a message service provided by the wireless network, using a subscriber's unique user identification number (such as a MSISDN number). In reply to the received message, which includes the packet data network address of the requesting server, the wireless station identifies itself to the packet data service part of the wireless network, if not already identified, activates a provided packet data service, if not already activated, and establishes a PDP connection with the requesting server. Using this PDP connection, the server may transfer packet data to the wireless communication station. This solution furthermore enables packet data to be transferred, or pushed, to a wireless station regardless of which current state the wireless station is in with respect to the packet data service of the wireless network.

When a packet switched connection, rather than a circuit switched connection, is used for transferring data to/from a user's wireless station, which for example is the case when introducing GPRS in a GSM system, it will be possible for the mobile user to be constantly connected not only to the wireless network, but also to the Internet or some other packet data network via the wireless network and an interconnecting gateway. As the mobile user is constantly connected, the user will be charged for the actual bandwidth he uses. This means that the mobile user will be charged for each packet transmitted or received by the user, rather than for the time duration of the data transfer. Thus, a subscriber will be charged for any information received as packet data, regardless of which source that transfers, or pushes, the packet data to the subscriber.

The above described solution provided by the identified Swedish publication SE9903637 allows any network server to transfer a packet data network address to a subscriber by addressing the subscriber's unique user identification number. In this respect it would be desirable that the mobile user more easily could control to which network server he initiates a PDP connection. Moreover, it would be desirable that the mobile user could restrict the transfer of information to only be effectuated from a confined set of network servers. Furthermore, it would be desired to be able to take measures that prevents a network server outside of this confined set to transfer information to the user. A drawback with the Swedish patent application 9903637-8 is that the above described solution does not include any satisfactory means for restricting pushed information transfer to only be effectuated from certain desired network servers. Thus, it does not provide a secure manner for preventing that a mobile user receives non-desired information. Not only is reception of non-desired information time consuming and frustrating for the mobile user, it is also costly since the mobile user have to pay for the received packet data over his subscription bill from the operator.

The drawbacks described above regarding the reception of non-desired information from any network server, and the additional drawback of being charged by an operator for such information, are also present in any situation where a network server knows the packet data network address of the user in advance and uses this address for establishing a packet data session with the user's wireless station.

Patent document US6047194, published on 4 April 2000, discloses the controlled forwarding of pushed data sent to the IP address of a mobile terminal by requesting via a SMS, the approval from the user to receive the pushed data originated at a specific source.

### Summary of the Invention

An object of the present invention is to overcome at least one of the drawbacks described above that are present in connection with pushing packet data, i.e. transmission of packet data on an originator's own initiative, from an originator to a mobile user in a wireless communication network.

According to the present invention, said object is achieved by methods, a computer-readable medium, a wireless communication station and a system having the features as defined in the appended claims and representing different aspects of the invention.

According to the invention, the wireless communication station stores one or more predefined network addresses. When a network address is received by the wireless station from an originator wishing tb push packet data to the wireless station, the received network address is checked against the stored predefined network addresses. If the received network address is found among the stored network addresses, the wireless station verifies the identity of the originator. The originator is determined to be authentic if the identity of the originator matches the possessor associated with the predefined network address. If the originator is authenticated, the wireless station establishes a packet data session with the originator. Using this packet data session, the originator may transfer, or push, packet data to the wireless station.

Thus, according to the invention, the wireless station has been pre-configured to only accept pushed packet data transmissions from one or more originators in possession of certain predefined network addresses. This means that the ability of network servers to push information to the wireless communication station is restricted to a certain confined set of one or more network servers. The identity verification combined with possessor information of a predefined network address(corresponding to the received network address), enables the wireless communication station to determine whether or not the originator in question indeed is the possessor of the received network address. Thus, it is ascertained that no information is received from a network server outside the confined set, not even if the originator has transmitted a "stolen" or "borrowed" network address to the wireless communication station.

Moreover, since the packet data session used for the information transfer from the network server is established by the wireless communication station, there is no need to beforehand provide any network server with the network address of the wireless communication station. An advantage with this, among others, is that a network server can not establish a session to the wireless communication station in order to transfer information, possibly non-desired, to the wireless station.

A further advantage provided by the establishment of the packet data session from the wireless station, is that the originator does not generate any signaling load against any repository in the wireless network storing packet data network addresses, something which otherwise can be a heavy burden on the repository when numerous originators, or servers, are trying to acquire packet network addresses to wireless stations connected to the wireless network. Furthermore, if dynamic packet data network addresses are used by the wireless network, which most often is the case, the burden will be even heavier since the network address allocated to a specific wireless station will change from time to time. Moreover, when a wireless station is roaming between different wireless networks of different operators, the problem of determining to which operator's repository a server's requests for a packet data network addresses should be routed is avoided.

Preferably, the identity of an originator is verified by using an address translation server. Typically, an address translation server will upon request return the network server name corresponding to a certain network address. If someone has stolen a network address corresponding to a network address predefined by the wireless station, so called "spoofing", the address translation server will upon request indicate the true network server name that currently is associated with the network address. This is possible since an address translation server typically is designed to regularly check what network server name that corresponds to what network address, and to store these relationships in some kind of repository. The wireless station, or its user, will discover that the current originator does not correspond to the possessor of the predefined network address. Thus, the originator will be found not to be authentic and a packet data session will not be established with the originator.

Preferably, the wireless communication station determines that an originator, from which a network address is received, is authentic by comparing the network server name returned by the address translation server with a server name stored by the wireless communication station. The stored server name being stored by the wireless station in association with the stored network address that was found to match the received network address.

Advantageously, the network addresses stored and received by the wireless station are Internet Protocol (IP) addresses. In this case the address translation server is preferably a DNS server (Domain Name System) which upon reception of an IP address returns a server host name.

The establishment of a packet data session with the originating server is either made based on the network address, or, via the address translation server, based on the host name of the server. Preferably, an application executing in the wireless communication station, and controlling its operation, is responsible for the establishment of the packet data session. An originator is typically connected to a packet data network which is operatively connected to the wireless communication network. However, an originator may also be directly connected to the wireless communication network.

In an embodiment, use is made of an originator identification code. By verifying that a server, with which a packet data session is established for reception of packet data, uses the same identification code as the originator of a received network address, yet another security level is added.

The invention is also advantageous since the network addresses, from which the mobile user approves reception of packet data, are easily managed. A network address of an originator is quickly and easily added to, or deleted from, the storage space of the wireless communication station in which the network addresses are stored. Thus, the invention provides an immediate employment of added/deleted network addresses with respect to reception of packet data from the corresponding originators.

It is to be understood that what is meant by the expression wireless communication station in this document, sometimes herein referred to only as wireless station, is either a stand-alone RF (Radio Frequency) transceiver having processing capabilities and displaying means, such as a mobile telephone or a hand-held PDA (Personal Digital Assistant), or, a RF transceiver together with any kind of portable or stationary equipment having processing capabilities, such as a portable laptop computer or a stationary personal computer, wherein the RF transceiver is arranged in communication with the portable or stationary equipment.

Even though the following description of an exemplifying embodiment will refer to a GSM network providing a GPRS service and an SMS-C (Short Message Service Center) providing a short message service, it is to be understood by those skilled in the art that the invention is not limited to these systems. The invention is advantageously applied to any wireless communication network that provides packet data transmissions to its connected users and that has an associated message service for transmitting short messages to the users. Such wireless communication networks have been exemplified in the background part of this application.

### Brief Description of the Drawings

Further features and advantages of the invention will become more readily understood from the following detailed description of exemplifying embodiments of the invention when taken in conjunction with the accompanying drawings, in which:
Fig. 1 schematically shows an exemplifying overall system environment in which an embodiment of the invention is included and operable; and
Fig. 2 is a flow chart of an embodiment of a method according to the invention which is practiced by a wireless communication station.

### Detailed Description of the Invention

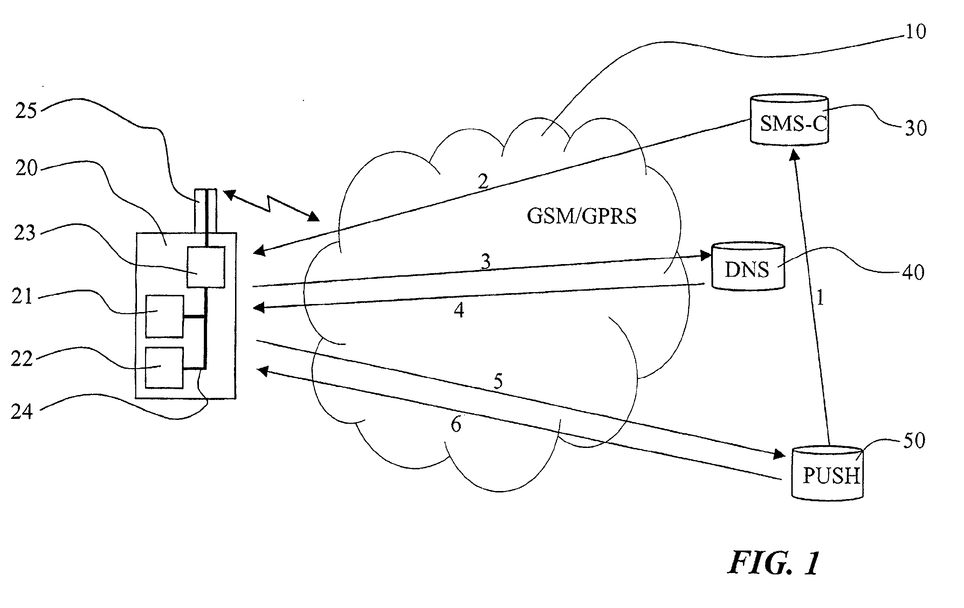

With reference to Fig. 1, an exemplifying embodiment of the invention will know be described in greater detail. Fig. 1 shows a wireless communication network 10, a wireless communication station 20, a node 30 for generating short messages for transmission to wireless communication stations, an address translation server 40, and an originator in the form of a network server 50 operatively connected to the wireless communication network 10. The wireless communication network is exemplified with a GSM network (Global System for Mobile Communication) and the wireless communication station with a GPRS mobile station. The packet data transferring capabilities of the GSM network 10 is provided by the GPRS service (General Packet Radio Service). GPRS being a standardization from the European Telecommunications Standard Institute (ETSI) on packet data in GSM systems. The node for generating short messages is exemplified with a SMS-C (Short Message Service Center) and the address translation server with a DNS server (Domain Name System). The network server 50 could be any server connected to the Internet or to a corporate Intranet to which the wireless communication network 10 is operatively connected by means of an appropriate gateway (not shown).

The architecture and operation of a GSM Network providing a GPRS service, as well as the standardization thereof, should be well known to persons skilled in the art. For this reason, only those features or aspects of GSM and GPRS that are of direct relevance to this described embodiment of the invention will be described herein.

A GSM network 10 which includes a GPRS service for handling packet data traffic is equipped with a Serving GPRS Support Node (SGSN) (not shown) and a Gateway GPRS Support Node (GGSN) (not shown). The SGSN is the node within the GSM infrastructure that sends and receives packet data to and from a wireless GPRS mobile station 20 via a Base Station System (not shown). The GPRS mobile station 20 communicates with the Base Station System over an air interface in accordance with the standardization of GSM and GPRS. The SGSN also transfers packets between the GPRS station 20 and the GGSN. Furthermore, the SGSN handles PDP contexts (Packet Data Protocol) for connections with any server in any external packet data network, such as with the network server 50 which is operatively connected to the GSM network 10. The GGSN, which is connected to the SGSN, is the gateway of the GSM/GPRS system to external packet data networks and routes packets between the SGSN and an external packet data network, e.g. the Internet or an corporate Intranet. For more information about GPRS, reference is made to ETSI standardization documents EN 301 113 V6.1.1 (1998-11) and Draft ETSI EN 301 344 V6.4.0 (1999-08).

Furthermore, the architecture and operation of the SMS-C and the DNS server are well known to persons with ordinary skills in the art, thus, only features of direct relevance to the present embodiment will be described herein.

The wireless communication station of the present invention, i.e. the GPRS mobile station 20 in the embodiment of Fig. 1, includes a state of the art microprocessor 21, a main memory 22 implemented by read only memory (ROM) and/or random access memory (RAM) or equivalents thereof, Input/output circuitry (not shown), such as a display and a keyboard/keypad, for communicating with a user, interface circuitry 23 in the form of transmitting/receiving radio frequency circuitry for communicating with the GSM network via an antenna 25 and the air interface, a bus 24 interconnecting the elements of the GPRS mobile station, as well as other appropriate components. Of these elements, at least some are controlled or otherwise designed to facilitate the practice of the method of the invention.

The microprocessor 21 executes appropriate computer-executable components stored in the main memory 22, thus controlling the elements and the overall wireless communication station/GPRS mobile station 20 to function in accordance with the method of the invention. Alternatively, these computer-executable components are stored on a pre-recorded disk, in a pre-programmed memory device, or any other computer-readable medium being separate from the wireless communication station 20. When the wireless communication station 20 and its included microprocessor 21 is provided with access to this computer-readable medium, its stored computer-executable components will direct the microprocessor 21 to control the overall wireless communication station 20 to function in accordance with the method of the invention.

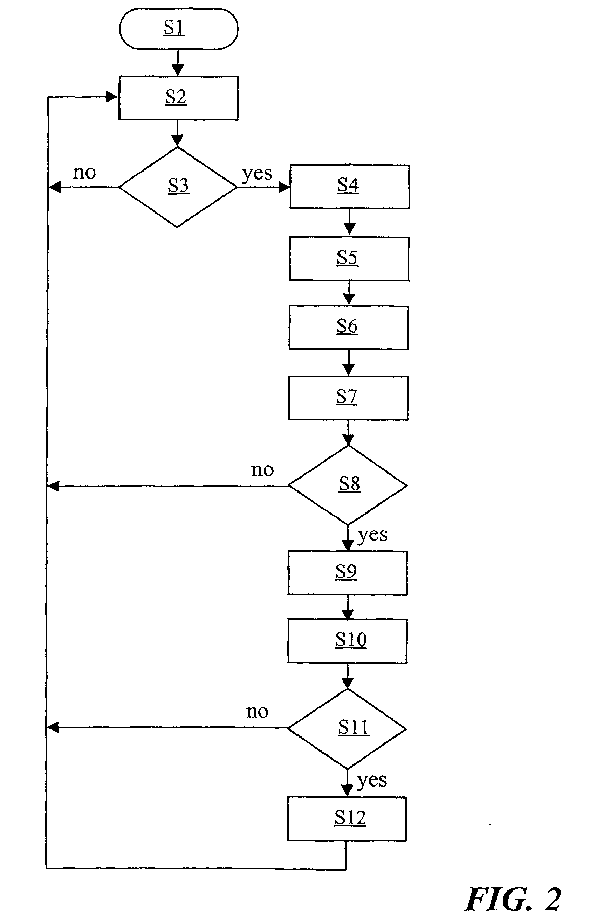

The operation of the wireless communication station/GPRS mobile station 20 will be more fully understood from the description below and from the description of the flow chart shown in Fig. 2.

The operation of the overall system and of the wireless communication station/GPRS mobile station in Fig. 1 in accordance with the embodiment will now be described in a step by step fashion, wherein each step has a reference numeral in Fig. 1. The described operation is started when the originator, i.e. the network server or push server 50, wants to push packet data over a TCP/IP connection to a GPRS subscriber operating a GPRS mobile station 20.
1. In step 1 the push server 50 connects to the SMS-C 30 and submits a request that an SMS message (Short Message Service) should be generated and transmitted to a GPRS subscriber having a particular MSISDN number (Mobile Station Integrated Services Digital Network) in accordance with the numbering plan used. This is performed over a transport protocol, such as TCP/IP or X25, in accordance with techniques that are well known to persons skilled in the art. The push server includes its own network address, i.e. its Internet Protocol (IP) address if the push server is connected to the Internet or an Intranet, in the submitted request. Furthermore, the push server 50 generates an identification code which is included in the submitted request as an originator identification code. A port number to be used when setting up a TCP/IP-based connection towards the server 50 is included in the request.
2. In step 2 the SMS-C 30 transmits the generated SMS message with the push server's 50 IP address and its generated originator identification code to the GPRS mobile station 20. The transmission is performed through the GSM/GPRS network 10 over a GSM signaling channel or on a GPRS traffic channel in accordance with state of the art techniques.
3. In step 3, an application already executing in the GPRS mobile station 20, or, which is started when the SMS message is received, extracts the payload of the SMS message. The SMS message could e.g. include an activation code, and if this code corresponds to a predefined code which is accepted by the application, the application processing proceeds, otherwise the application processing is stopped. Thus, if no activation code is found, the SMS message is treated in the usual way, which is outside the scope of the present invention. If the activation code is present, the application extracts the payload of the SMS message, i.e. the received IP address, port number and originator identification code. The application then checks the IP address received in the SMS message against a set of stored IP addresses. These stored IP addresses has previously been defined by the subscriber and are stored in a memory accessible to the application, either in an internal RAM memory 22 of the GPRS station 20 or in an external memory, such as on a SIM (Subscriber Identity Module) card (not shown) connected to the GPRS station 20. The stored IP addresses, or the stored IP address, corresponds to those, or the, push server(s) from which the GPRS subscriber wants to be able to receive pushed packet data.
   If a match is found by the GPRS station 20 among the stored IP addresses, the received originator identification code is saved and a TCP/IP connection is set up towards the DNS server 40. This TCP/IP connection is preferably set up in accordance with the GPRS connection phase described below. The IP address received in the payload of the SMS message is then sent to the DNS server 40 over the established TCP/IP connection.
4. In step 4 the DNS server 40 looks up the IP address to find the corresponding server host name. When found, the matching server host name is transmitted back to the GPRS station 20 over the TCP/IP connection. Thus, the GPRS station 20 is provided with the host name of the server 50 wishing to push information to it.
5. In step 5 the GPRS station 20 now authenticates the push server 50, i.e. it checks if the push server is the actual possessor of the received IP address. This is performed by examining the resulting host name returned from the DNS server 40 with respect to the server host names stored in association with the predefined IP addresses that are stored by the GPRS station 20. The application checks the received server host name by comparing it with the server host name that is stored in association with the predefined IP address that was found to match the earlier received IP address. Alternatively, the application of the GPRS station 20 displays the host name received from the DNS server 40 to the mobile user on a display of the GPRS station 20, after which the mobile user, if the host name is recognized, manually (e.g. by pressing a key on a keypad) verifies that the returned host name corresponds to one of the stored predefined IP addresses. If the push server was determined to be authentic, i.e. if it was determined to be the true possessor of the received IP address, the application processing continues to the GPRS connection phase.
   As previously described in the background section, when pushing information to a wireless communication station, there are three requirements that have to be met in order for a wireless communication network to be able to initiate the packet data transfer to the wireless station. These requirements, which are part of the GPRS connection phase, include that 1) the wireless station has been switched on, 2) the wireless station has identified itself to those parts of the wireless communication network that provides the packet data service, and that 3) a Packet Data Protocol (PDP) address has been allocated to the wireless station.
   In a GSM/GPRS network 10, after the requirements above have been met, measures are taken by the GSM/GPRS network for initializing and activating a packet data service to the wireless GPRS station 20, measures of the GPRS connection phase that are well known in the art. After activation of the packet data service, packet data addressed to the PDP address that has been allocated to a GPRS station 20 will be routed to that station. As described in the background section, the PDP address allocated to the GPRS station 20 is either a permanent (static) or a temporary (dynamic) address allocated to that station.
   Thus, in the GPRS connection phase the application identifies the GPRS station 20 for the packet data service part of the GSM/GPRS network 10, if it is not already identified. This corresponds to checking whether the GPRS station 20 is GPRS attached or not. If the GPRS station is not attached, the application performs a GPRS attach. The GPRS attach is preferably performed in accordance with standard procedure, see for example Draft ETSI EN 301 344 V6.4.0 (1999-08), chapter 6.2. The GPRS application then checks if the GPRS station 20 has a valid IP-address (i.e. if it has a working TCP/IP connection). If not, the application requests the GSM/GPRS network 10 to activate a packet data service to be used by the GPRS station 20, i.e. it initiates the performance of a GPRS PDP Context Activation. The GPRS application then either receives a dynamically allocated IP-address from the GSM/GPRS network 10 or from a Radius server (not shown) via the GSM/GPRS network. The GPRS PDP Context Activation and the transfer of a dynamic IP-address are preferably performed in accordance with standard procedure, see for example TS 101 348 V6.3.0 (1998-10), chapter 11.2.1.2. Of course, the GPRS application could alternatively already have a static IP address allocated to it when initiating the GPRS PDP Context Activation.
   The application of the GPRS station 20 then initiates establishment of a TCP/IP connection towards the IP-address and the port number received in the SMS message. The IP address and the port number designates the server 50 and a server application wishing to push packet data. Alternatively, when establishing the connection, the push server 50 is identified using the server host name received from the DNS server 40.
6. In step 6 the push server 50 recognizes that a TCP/IP connection has been set up from the GPRS station 20 to which it earlier initiated the transmission of an SMS message in order to accomplish the now established connection. This recognition is based on information which the GPRS station 20 has included in the response message, e.g. the MSISDN of the GPRS station 20 or a request code originally generated and included in the SMS message previously transmitted by the server 50. The push server 50 responds by first transmitting the same originator identification code which it earlier transmitted in the SMS message to the GPRS station. This will enable the GPRS station to verify that the push server 50 to which a TCP/IP connection now is established is the same server as that which transmitted the original SMS message triggering the set-up of the connection. After transmission of the identification code the push server 50 starts transmitting packet data with information to the GPRS station 20.

In Fig. 2 a flow chart of the operation of a wireless communication station/GPRS mobile station and its included executing application is shown.

In step S1 the mobile user enters the IP address(es), and preferably the corresponding server host name(s), of the server(s) 50 from which it is desired to receive pushed packet data. The IP addresses and corresponding host names, as well as the address of the DNS server 40, are stored in a memory 22 of the GPRS station 20 for later retrieval by an application executing in the GPRS station. Alternatively, this step S1 relates to the actual loading of an application in the GPRS mobile station, which application already includes the IP addresses and corresponding host names of predefined originators from which the GPRS station shall be able to receive pushed packet data.

In step S2 the application of the GPRS station receives an SMS message from which payload it extracts an IP address, a port number and an originator identification code. The application then in step S3 checks whether or not the received IP address matches any of the stored IP addresses. If no match is found, the application execution returns to step S2. If a match is found, the execution continues to step S4, in which step the received originator identification code is stored.

In step S5 the application establishes a TCP/IP connection with the DNS server using the pre-stored IP address. It then in step S6 transmits the IP address received in the SMS message and requests the DNS server to perform an address translation. In response to the request, the application in step S7 receives a host name from the DNS server. In step S8 the received host name is checked for a match against the host name stored in association with the stored IP address that corresponded to the IP address received in the SMS message. If no match is found, the originator is determined not to be authentic and the execution returns to step S2. If a match is found the execution continues to step S9.

In step S9 the application establishes a TCP/IP connection with the originator of the IP address received in the SMS message, i.e. with the push server 50. It then once again receives an originator identification code from the push server, this time in step S10 over the TCP/IP connection, which code in step S11 is matched against the identification code previously received in the SMS message. If no match is found, the execution returns to step S2. If a match is found, the execution continues to step S12 in which packet data transmissions are accepted and received from the push server.

Although the invention has been described with reference to a specific exemplifying embodiment based on a GSM system providing a GPRS service, many different alterations, modifications and the like will become apparent for those skilled in the art. The described embodiments are therefore not intended to limit the scope of the invention, as defined by the appended claims. Instead, it is to be understood that the present invention is well suited for any wireless communication network that provides a packet data service to its connected wireless users.

## Claims

1. A method at a wireless communication station (20), the station being operatively associated with a wireless communication network (10) providing packet data transferring services, the method including the steps of:
receiving a network address of an originator (50) of packet data;
verifying the identity of the originator (50), if the received network address matches a predefined network address included in a set of one or more predefined network addresses stored by the wireless communication station (20); and
establishing, if the originator (50) is authentic, a packet data session with the originator (50) in order to facilitate transfer of packet data from the originator (50),
thereby ascertaining that pushed packet data only is received from one or more predefined originators.

2. The method as claimed in claim 1, wherein each of said predefined network addresses of said set is associated, within the wireless communication station, with a name of a network server (50) from which it is desired to receive packet data.

3. The method as claimed in claim 1 or 2, wherein said verifying step includes:
establishing a packet data session with an address translation server (40);
requesting translation of the network address to a corresponding name of a network server; and
determining, based upon the result of said translation, whether or not the network address is authentic.

4. The method as claimed in claim 3, wherein said determining step includes comparing the network server name returned by said address translation server (40) with a previously stored network server name, the stored name being stored by the wireless communication station in such way that it is associated with the predefined network address matching said received network address.

5. The method as claimed in any one of claims 1 - 4, wherein said network address of said receiving step is received in a short message, the short message being received from a short message service (30) provided by said wireless communication network (10).

6. The method as claimed in any one of claims 1 - 5, wherein said step of establishing a packet data session with the originator (50) includes establishing a packet data session using the network address of said receiving step.

7. The method as claimed in any one of claims 1 - 6, wherein said network address is an Internet Protocol address.

8. The method as claimed in any one of claims 3 - 5, wherein said step of establishing a packet data session with the originator (50) includes establishing a packet data session using the name of the network server, which name is returned by the translation server (40).

9. The method as claimed in any one of claims 3 - 8, wherein said name of the network server is an Internet domain host name of the network server.

10. The method as claimed in any one of claims 1 - 9, further including:
receiving a first originator (50) identification code in said receiving step;
receiving a second originator (50) identification code over the packet data session established with the originator; and
verifying, based on a comparison between the first and the second identification code, that the packet data session was established with the originator (50) of the received network address.

11. A computer-readable medium storing computer-executable components for causing a wireless communication station (20) to perform the steps recited in any one of claims 1 - 10 when the computer-executable components are run on microprocessor included by a wireless communication station (20)

12. A wireless communication station (20) arranged to be operatively associated with a wireless communication network (10) providing packet data transferring services, wherein the wireless communication station (20) includes processing means, memory means and interface circuitry means for performing the steps recited in any one of claims 1 - 10, thereby ascertaining that pushed packet data only is received from one or more predefined originators.

13. A method of a system which includes a wireless communication station (20) and an originator (50) of information, the station being operatively associated with a wireless communication network (10) providing packet data transferring services, the method including the steps of:
transmitting, from the originator (50) to the wireless communication station (20), the originator's own network address;
verifying, at the wireless communication station (20), the identity of the originator (50), if the received network address matches a predefined network address included in a set of one or more predefined network addresses stored by the wireless communication station (20);
establishing, from the wireless communication station (20), and if the originator (50) is determined by the wireless communication station (20) to be authentic, a packet data session with the originator (50) in order to facilitate transfer of packet data from the originator (50),
thereby ascertaining that pushed packet data only is received from one or more predefined originators.

14. The method as claimed in claim 13, wherein each of the predefined network addresses of said set is associated, within the wireless communication station (20), with a name of a network server from which transfer of packet data to the wireless communication station (20) is desired.

15. The method as claimed in claim 13 or 14, wherein said verifying step includes:
establishing, from the wireless communication station (20), a packet data session with an address translation server (40);
requesting, from the wireless communication station (20), translation of the network address to a corresponding name of a network server; and
determining, at the wireless communication station (20), and based upon the result of said translation, whether or not the network address is authentic.

16. The method as claimed in claim 15, wherein said determining step includes comparing, at the wireless communication station (20), the network server name returned by said address translation server (40) with a previously stored network server name, the stored name being stored by the wireless communication station (20) in such way that it is associated with the predefined network address matching said received network address.

17. The method as claimed in any one of claims 13 - 16, wherein said network address of said transmitting step is transmitted by requesting a short message service (30) provided by a wireless communication network (10) to transmit a short message that includes said network address to the wireless communication station (20).

18. The method as claimed in any one of claims 13 - 17, wherein said step of establishing a packet data session with the originator (50) includes establishing, from the wireless communication station (20), a packet data session using the network address received as a result from said transmitting step.

19. The method as claimed in any one of claims 13 - 18, wherein said network address is an Internet Protocol address.

20. The method as claimed in any one of claims 15 - 17, wherein said step of establishing a packet data session with the originator (50) includes establishing, from the wireless communication station (20), a packet data session using the name of the network server, which name is returned by the translation server (40) in said verifying step.

21. The method as claimed in any one of claims 15 - 20, wherein said name of the network server is an Internet domain host name of the network server.

22. The method as claimed in any one of claims 13 - 21, further including:
transmitting a first originator (50) identification code in said transmitting step;
transmitting, from the originator (50), a second originator (50) identification code over the packet data session established between the wireless communication station (20) and the originator (50); and
verifying, at the wireless communication station (20), and based on a comparison between the first and the second identification code, that the packet data session was established with the originator (50) of the network address received in said transmitting step.

23. A system including a wireless communication station (20) and at least one originator server (50), the station being operatively associated with a wireless communication network (10) providing packet data transferring services, wherein the system is arranged to perform the steps recited in any one of claims 13 - 22, thereby ascertaining that the wireless communication station (20) only receives pushed packet data from one or more predefined originators.

## Revendications

1. Procédé au niveau d'une station de communication sans fil (20), la station étant associée de manière fonctionnelle à un réseau de communication sans fil (10) fournissant des services de transfert de données par paquets, le procédé comprenant les étapes consistant à:
recevoir une adresse de réseau d'un expéditeur (50) de données par paquets;
vérifier l'identité de l'expéditeur (50), si l'adresse de réseau reçue correspond à une adresse de réseau prédéfinie incluse dans un ensemble d'une ou de plusieurs adresses de réseau prédéfinies qui sont stockées par la station de communication sans fil (20); et
établir, si l'expéditeur (50) est authentique, une session de données par paquets avec l'expéditeur (50) afin de faciliter le transfert de données par paquets en provenance de l'expéditeur (50),
de façon à assurer que seules des données par paquets poussées sont reçues d'un ou de plusieurs expéditeurs prédéfinis.

2. Procédé selon la revendication 1, dans lequel chacune desdites adresses de réseau prédéfinies dudit ensemble est associée, au sein de la station de communication sans fil, à un nom d'un serveur de réseau (50) à partir duquel la réception de données par paquets est souhaitée.

3. Procédé selon la revendication 1 ou la revendication 2, dans lequel ladite étape de vérification comprend les étapes consistant à:
établir une session de données par paquets avec un serveur de traduction d'adresse (40);
demander la traduction de l'adresse de réseau en un nom correspondant d'un serveur de réseau; et
déterminer, sur la base du résultat de ladite traduction, si l'adresse de réseau est ou non authentique.

4. Procédé selon la revendication 3, dans lequel ladite étape de détermination comprend l'étape consistant à comparer le nom de serveur de réseau renvoyé par ledit serveur de traduction d'adresse (40) à un nom de serveur de réseau précédemment stocké, le nom stocké étant stocké par la station de communication sans fil de telle manière qu'il soit associé à l'adresse de réseau prédéfinie correspondant à ladite adresse de réseau reçue.

5. Procédé selon l'une quelconque des revendications 1 à 4, dans lequel ladite adresse de réseau de ladite étape de réception est reçue dans un message court, le message court étant reçu d'un service de messages courts (30) fourni par ledit réseau de communication sans fil (10).

6. Procédé selon l'une quelconque des revendications 1 à 5, dans lequel ladite étape d'établissement d'une session de données par paquets avec l'expéditeur (50) comprend l'étape consistant à établir une session de données par paquets en utilisant l'adresse de réseau de ladite étape de réception.

7. Procédé selon l'une quelconque des revendications 1 à 6, dans lequel ladite adresse de réseau est une adresse de Protocole Intemet.

8. Procédé selon l'une quelconque des revendications 3 à 5, dans lequel l'étape consistant à établir une session de données par paquets avec l'expéditeur (50) comprend l'étape consistant à établir une session de données par paquets en utilisant le nom du serveur de réseau, lequel nom est renvoyé par le serveur de traduction (40).

9. Procédé selon l'une quelconque des revendications 3 à 8, dans lequel ledit nom du serveur de réseau est un nom d'hôte de domaine Internet du serveur de réseau.

10. Procédé selon l'une quelconque des revendications 1 à 9, comprenant, en outre, les étapes consistant à:
recevoir un premier code d'identification d'expéditeur (50) au cours de ladite étape de réception;
recevoir un second code d'identification d'expéditeur (50) au cours de la session de données par paquets établie avec l'expéditeur; et
vérifier, sur la base d'une comparaison entre les premier et second codes d'identification, que la session de données par paquets a été établie avec l'expéditeur (50) de l'adresse de réseau reçue.

11. Support lisible par ordinateur stockant des éléments exécutables par ordinateur pour amener une station de communication sans fil (20) à exécuter les étapes définies dans l'une quelconque des revendications 1 à 10 lorsque les éléments exécutables par ordinateur sont exécutés par un microprocesseur faisant partie d'une station de communication sans fil (20).

12. Station de communication sans fil (20) conçue pour être associée de manière fonctionnelle à un réseau de communication sans fil (10) fournissant des services de transfert de données par paquets, la station de communication sans fil (20) comprenant des moyens de traitement, des moyens formant mémoire et des moyens formant circuits d'interface pour exécuter les étapes définies dans l'une quelconque des revendications 1 à 10, pour assurer ainsi que seules des données par paquets poussées sont reçues d'un ou de plusieurs expéditeurs prédéfinis.

13. Procédé d'un système qui comprend une station de communication sans fil (20) et un expéditeur (50) d'informations, la station étant associée de manière fonctionnelle à un réseau de communication sans fil (10) fournissant des services de transfert de données par paquets, le procédé comprenant les étapes consistant à:
transmettre, de l'expéditeur (50) à la station de communication sans fil (20), la propre adresse de réseau de l'expéditeur;
vérifier, au niveau de la station de communication sans fil (20), l'identité de l'expéditeur (50), si l'adresse de réseau reçue correspond à une adresse de réseau prédéfinie incluse dans un ensemble d'une ou de plusieurs adresses de réseau prédéfinies qui sont stockées par la station de communication sans fil (20);
établir, à partir de la station de communication sans fil (20), et si la station de communication sans fil (20) détermine que l'expéditeur (50) est authentique, une session de données par paquets avec l'expéditeur (50) afin de faciliter le transfert de données par paquets à partir de l'expéditeur (50),
de façon à assurer que seules des données par paquets poussées sont reçues d'un ou de plusieurs expéditeurs prédéfinis.

14. Procédé selon la revendication 13, dans lequel chacune des adresses de réseau prédéfinies dudit ensemble est associée, au sein de la station de communication sans fil (20), à un nom d'un serveur de réseau à partir duquel le transfert de données par paquets à la station de communication sans fil (20) est souhaité.

15. Procédé selon la revendication 13 ou la revendication 14, dans lequel ladite étape de vérification comprend les étapes consistant à:
établir, à partir de la station de communication sans fil (20), une session de données par paquets avec un serveur de traduction d'adresse (40);
demander, à partir de la station de communication sans fil (20), la traduction de l'adresse de réseau en un nom correspondant d'un serveur de réseau; et
déterminer, au niveau de la station de communication sans fil (20) et sur la base du résultat de ladite traduction, si l'adresse de réseau est ou non authentique.

16. Procédé selon la revendication 15, dans lequel ladite étape de détermination comprend l'étape consistant à comparer, au niveau de la station de communication sans fil (20), le nom de serveur de réseau renvoyé par ledit serveur de traduction d'adresse (40) à un nom de serveur de réseau précédemment stocké, le nom stocké étant stocké par la station de communication sans fil (20) de telle manière qu'il soit associé à l'adresse de réseau prédéfinie correspondant à ladite adresse de réseau reçue.

17. Procédé selon l'une quelconque des revendications 13 à 16, dans lequel ladite adresse de réseau de ladite étape de transmission est transmise en demandant à un service de messages courts (30) fourni par un réseau de communication sans fil (10) de transmettre à la station de communication sans fil (20) un message court qui comprend ladite adresse de réseau.

18. Procédé selon l'une quelconque des revendications 13 à 17, dans lequel ladite étape consistant à établir une session de données par paquets avec l'expéditeur (50) comprend l'étape consistant à établir, à partir de la station de communication sans fil (20), une session de données par paquets en utilisant l'adresse de réseau reçue en conséquence de ladite étape de transmission.

19. Procédé selon l'une quelconque des revendications 13 à 18, dans lequel ladite adresse de réseau est une adresse de Protocole Intemet.

20. Procédé selon l'une quelconque des revendications 15 à 17, dans lequel ladite étape consistant à établir une session de données par paquets avec l'expéditeur (50) comprend l'étape consistant à établir, à partir de la station de communication sans fil (20), une session de données par paquets en utilisant le nom du serveur de réseau, lequel nom est renvoyé par le serveur de traduction (40) lors de ladite étape de vérification.

21. Procédé selon l'une quelconque des revendications 15 à 20, dans lequel ledit nom du serveur de réseau est un nom d'hôte de domaine Internet du serveur de réseau.

22. Procédé selon l'une quelconque des revendications 13 à 21, comprenant, en outre, les étapes consistant à:
transmettre un premier code d'identification d'expéditeur (50) au cours de ladite étape de transmission;
transmettre, à partir de l'expéditeur (50), un second code d'identification d'expéditeur (50) au cours de la session de données par paquets établie entre la station de communication sans fil (20) et l'expéditeur (50); et
vérifier, au niveau de la station de communication sans fil (20) et sur la base d'une comparaison entre les premier et second codes d'identification, que la session de données par paquets a été établie avec l'expéditeur (50) de l'adresse de réseau reçue au cours de ladite étape de transmission.

23. Système comprenant une station de communication sans fil (20) et au moins un serveur expéditeur (50), la station étant associée de manière fonctionnelle à un réseau de communications sans fil (10) fournissant des services de transfert de données par paquets, le système étant conçu pour exécuter les étapes définies dans l'une quelconque des revendications 13 à 22, pour assurer ainsi que la station de communication sans fil (20) reçoit uniquement des données par paquets poussées en provenance d'un ou de plusieurs expéditeurs prédéfinis.

## Patentansprüche

1. Verfahren an einer Drahtlos-Kommunikationsstation (20), wobei die Station funktionell mit einem Drahtlos-Kommunikationsnetzwerk (10) verbunden ist, das Paketdaten-Übertragungsdienste bereitstellt, und das Verfahren die folgenden Schritte einschließt:
Empfangen einer Netzwerkadresse einer Quelle (50) von Paketdaten;
Prüfen der Identität der Quelle (50), wenn die empfangene Netzwerkadresse einer vordefinierten Netzwerkadresse entspricht, die in einem Satz einer oder mehrerer vordefinierter Netzwerkadressen enthalten ist, der durch die Drahttos-Kommunikationsstation (20) gespeichert wird, und
wenn die Quelle (50) authentisch ist, Einrichten einer Paketdatensitzung mit der Quelle (50), um Übertragung von Paketdaten von der Quelle (50) zu ermöglichen,
so dass gesichert wird, dass Push-Paketdaten nur von einer oder mehreren vordefinierten Quellen empfangen werden.

2. Verfahren nach Anspruch 1, wobei jede der vordefinierten Netzwerkadressen des Satzes in der Drahtlos-Kommunikationsstation mit einem Namen eines Netzwerk-Servers (50) verknüpft ist, von dem der Empfang von Paketdaten erwünscht ist.

3. Verfahren nach Anspruch 1 oder 2, wobei der Prüfschritt einschließt:
Einrichten einer Paketdaten-Sitzung mit einem Adressübersetzungs-Server (40);
Anfordern von Übersetzung der Netzwerkadresse in einem entsprechenden Namen eines Netzwerk-Servers; und
auf Basis des Ergebnisses der Übersetzung Feststellen, ob die Netzwerkadresse authentisch ist oder nicht.

4. Verfahren nach Anspruch 3, wobei der Feststellschritt Vergleichen des vom Adressübersetzungs-Server (40) zurückgeführten Namens des Netzwerk-Servers mit einem zuvor gespeicherten Namen eines Netzwerk-Servers einschließt, und der gespeicherte Name durch die Drahtlos-Kommunikationsstation so gespeichert wird, dass er mit der vordefinierten Netzwerkadresse verknüpft ist, die der empfangenen Netzwerkadresse entspricht.

5. Verfahren nach einem der Ansprüche 1-4, wobei die Netzwerkadresse des Empfangsschritts in einer Kurznachricht empfangen wird und die Kurznachricht von einem Kurznachricht-Dienst (30) empfangen wird, der von dem Drahtlos-Kommunikationsnetzwerk (10) bereitgestellt wird.

6. Verfahren nach einem der Ansprüche 1-5, wobei der Schritt des Einrichtens einer Paketdaten-Sitzung mit der Quelle (50) Einrichten einer Paketdaten-Sitzung unter Verwendung der Netzwerkadresse des Empfangsschritts einschließt.

7. Verfahren nach einem der Ansprüche 1-6, wobei die Netzwerkadresse eine Internet-Protokoll-Adresse ist.

8. Verfahren nach einem der Ansprüche 3-5, wobei der Schritt des Einrichtens einer Paketdaten-Sitzung mit der Quelle (50) Einrichten einer Paketdaten-Sitzung unter Verwendung des Namens des Netzwerk-Servers einschließt und dieser Name durch den Übersetzungs-Server (40) zurückgeführt wird.

9. Verfahren nach einem der Ansprüche 3-8, wobei der Name des Netzwerk-Servers ein Internet-Domain-Hostname des Netzwerk-Servers ist.

10. Verfahren nach einem der Ansprüche 1-9, das des Weiteren einschließt:
Empfangen eines ersten ldentiftzierungscodes der Quelle (50) in dem Empfangsschritt;
Empfangen eines zweiten Identifizierungscodes der Quelle (50) über die Paketdaten-Sitzung, die mit der Quelle eingerichtet wird; und
auf Basis eines Vergleichs zwischen dem ersten und dem zweiten Identifizierungscode Prüfen, ob die Paketdaten-Sitzung mit der Quelle (50) der empfangenen Netzwerkadresse eingerichtet wurde.

11. Computerlesbares Medium, das durch Computer ausführbare Komponenten speichert, die eine Drahtlos-Kommunikationsstation (20) veranlassen, die in einem der Ansprüche 1-10 aufgeführten Schritte durchzuführen, wenn die computerausführbaren Komponenten auf einem Mikroprozessor ausgeführt werden, der in einer Drahtlos-Kommunikationsstation (20) enthalten ist.

12. Drahtlos-Kommunikationsstation (20), die so eingerichtet ist, dass sie funktionell mit einem Drahtlos-Kommunikationsnetzwerk (10) verbunden ist, das Paketdaten-Übertragungsdienste bereitstellt, wobei die Drahtlos-Kommunikationsstation (20) eine Verarbeitungseinrichtung, eine Speichereinrichtung und eine Schnittstellen= schaltungseinrichtung zum Durchführen der in einem der Ansprüche 1-10 aufgeführten Schritte enthält, um so zu sichem, dass Push-Paketdaten nur von einer oder mehreren vordefinierten Quellen empfangen werden.

13. Verfahren eines Systems, das eine Drahtlos-Kommunikationsstation (20) und eine Quelle (50) von Informationen enthält, wobei die Station funktionell mit einem Drahtlos-Kommunikationsnetzwerk (10) verbunden ist, das Paketdaten-Übertragungsdienste bereitsteillt, und wobei das Verfahren die folgenden Schritte einschließt:
Senden der eigenen Netzwerkadresse der Quelle von der Quelle (50) zu der Drahtlos-Kommunikationsstation (20);
Prüfen der Identität der Quelle (50) an der Drahtlos-Kommunikationsstation, wenn die empfangene Netzwerkadresse einer vordefinierten Netzwerkadresse entspricht, die in einem Satz einer oder mehrerer vordefinierter Netzwerkadressen enthalten ist, der durch die Drahtlos-Kommunikationsstation (20) gespeichert wird;
wenn durch die Drahtlos-Kommunikationsstation (20) festgestellt wird, dass die Quelle (50) authentisch ist, Einrichten einer Paketdaten-Sitzung von der Drahtlos-Kommunikationsstation (20) mit der Quelle (50), um Übertragung von Paketdaten von der Quelle (50) zu ermöglichen,
so dass gesichert wird, dass Push-Paketdaten nur von einer oder mehreren vordefinierten Quellen empfangen werden.

14. Verfahren nach Anspruch 13, wobei jede der vordefinierten Netzwerkadressen des Satzes in der Drahtlos-Kommunikationsstation (20) mit einem Namen eines Netzwerk-Servers verknüpft ist, von dem Übertragung von Paketdaten zu der Drahtlos-Kommunikationsstation (20) erwünscht ist.

15. Verfahren nach Anspruch 13 oder 14, wobei der Prüfschritt einschließt:
Einrichten einer Paketdaten-Sitzung mit einem Adressübersetzungs-Server (40) von der Drahtlos-Kommunikationsstation (20);
Anfordern von Übersetzung der Netzwerkadresse in einen entsprechenden Namen eines Netzwerk-Servers von der Drahtlos-Kommunikationsstation (20); und
auf Basis des Ergebnisses der Übersetzung Feststellen an der Drahtlos-Kommunikationsstation (20), ob die Netzwerkadresse authentisch ist oder nicht.

16. Verfahren nach Anspruch 15, wobei der Feststellschritt Vergleichen des durch den Adressübersetzungs-Server (40) zurückgeführten Namens des Netzwerk-Servers mit einem zuvor gespeicherten Namen eines Netzwerk-Servers an der Drahtlos-Kommunikationsstation (20) einschließt und der gespeicherte Name durch die Drahtlos-Kommunikationsstation (20) so gespeichert wird, dass er mit der vordefinierten Netzwerkadresse verknüpft ist, die der empfangenen Netzwerkadresse entspricht.

17. Verfahren nach einem der Ansprüche 13-16, wobei die Netzwerkadresse des Sendeschritts gesendet wird, indem ein Kurznachrichten-Dienst (30) angefordert wird, der von einem Drahtlos-Kommunikationsnetzwerk (10) bereitgestellt wird, um eine Kurznachricht, die die Netzwerkadresse enthält, zu der Drahtlos-Kommunikationsstation (20) zu senden.

18. Verfahren nach einem der Ansprüche 13-17, wobei der Schritt des Einrichtens einer Paketdaten-Sitzung mit der Quelle (50) Einrichten einer Paketdaten-Sitzung von der Drahtlos-Kommunikationsstation (20) unter Verwendung der als Ergebnis des Sendeschritts empfangenen Netzwerkadresse einschließt.

19. Verfahren nach einem der Ansprüche 13-18, wobei die Netzwerkadresse eine Internet-Protokoll-Adresse ist.

20. Verfahren nach einem der Ansprüche 15-17, wobei der Schritt des Einrichtens einer Paketdaten-Sitzung mit der Quelle (50) Einrichten einer Paketdaten-Sitzung von der Drahtlos-Kommunikationsstation (20) unter Verwendung des Namens des Netzwerk-Servers einschließt und dieser Name durch den Übersetzungsserver (40) in dem Prüfschritt zurückgeführt wird.

21. Verfahren nach einem der Ansprüche 15-20, wobei der Name des Netzwerk-Servers ein Internet-Domain-Hostname des Netzwerk-Servers ist.

22. Verfahren nach einem der Ansprüche 13-21, das des Weiteren einschließt:
Senden eines ersten Identifizierungscodes der Quelle (50) in dem Sendeschritt;
Senden eines zweiten Identifizierungscodes der Quelle (50) von der Quelle (50) Ober die Paketdaten-Sitzung, die zwischen der Drahtlos-Kommunikationsstation (20) und der Quelle (50) eingerichtet wird; und
auf Basis eines Vergleichs zwischen dem ersten und dem zweiten Identifizierungscode Prüfen an der Drahtlos-Kommunikationsstation (20), ob die Paketdaten-Sitzung mit der Quelle (50) der in dem Sendeschritt empfangenen Netzwerkadresse eingerichtet wurde.

23. System, das eine Drahtlos-Kommunikationsstation (20) und wenigstens einen Quellen-Server (50) enthält, wobei die Station funktionell mit einem Drahtlos-Kommunikationsnetzwerk (10) verbunden ist, das Paketdaten-Übertragungsdienste bereitstellt, und das System so eingerichtet ist, dass es die in einem der Ansprüche 13-22 aufgeführten Schritte durchführt, um so zu sichern, dass die Drahtlos-Kommunikationsstation (20) nur Push-Paketdaten von einer oder mehreren vordefinierten Quellen empfängt.
